# EUROPÄISCHE PATENTSCHRIFT

(11) **EP 2 441 633 B1**
(45) Veröffentlichungstag und Bekanntmachung des Hinweises auf die Patenterteilung: **05.08.2015**
(21) Anmeldenummer: 11006808.7
(22) Anmeldetag: 20.08.2011
(51) Int. Cl.: B60W 30/186, B60W 10/184, B60W 10/06, B60W 10/30, B60W 10/10, B60W 50/00

(54) **Verfahren und Vorrichtung zum Betrieb eines Fahrzeugs, insbesondere eines Kraft- oder Nutzfahrzeuges**
Method and device for operating a vehicle, in particular a commercial or motor vehicle
Procédé et dispositif destinés à l'entraînement d'un véhicule, en particulier un véhicule automobile ou utilitaire

(30) Priorität: 13.10.2010 DE 102010048326
(43) Veröffentlichungstag der Anmeldung: 18.04.2012
(73) Patentinhaber: MAN Truck & Bus AG, 80995 München (DE)
(72) Erfinder: Dörner, Karlheinz, 85757 Karlsfeld (DE); Zimmermann, Andreas, 80995 München (DE); Heyes, Daniel, 80687 München (DE); Huber, Martin, 81243 München (DE); Drimml, Peter, 85221 Dachau (DE); Michel, Britta, 81675 München (DE)

(56) Entgegenhaltungen:
- WO-A1-2005/005191
- DE-A1-102005 035 624
- DE-A1-102006 001 818

## Beschreibung

Die Erfindung betrifft ein Verfahren zum Betrieb eines Fahrzeugs, insbesondere eines Kraft- oder Nutzfahrzeuges, nach dem Oberbegriff des Anspruchs 1 sowie eine Vorrichtung zum Betrieb eines Fahrzeugs, insbesondere eines Kraft- oder Nutzfahrzeuges, nach dem Oberbegriff des Anspruchs 10.

Derartige Verfahren und Vorrichtungen zum Betrieb eines Fahrzeuges sind allgemein bekannt, so zum Beispiel aus der DE 10 2008 036 457 A1. Dort wird ein Verfahren und eine Vorrichtung zum Betrieb eines Kraftfahrzeugs vorgeschlagen, mittels derer ein Energieverbrauch des Kraftfahrzeuges reduziert werden soll. Hierzu ist vorgesehen, dass eine Batterie des Kraftfahrzeuges in Abhängigkeit von Eigenschaften einer voraussichtlichen Fahrtroute, voraussichtlichen Verkehrsbedingungen und/oder voraussichtlichen Umgebungsbedingungen geregelt bzw. gesteuert wird. Konkret umfasst hierzu die Vorrichtung ein Navigationssystem, eine Empfangseinheit zum Empfang von Daten einer aktuellen Verkehrslage, eine zweite Empfangseinheit zum Empfang von Daten einer Wettervorhersage und einen Laderegler, dem Signale des Navigationssystems und der beiden Empfangseinheiten zuführbar sind. Mittels dem Laderegler wird in Abhängigkeit von diesen Signalen die Aufladung der Batterie durch einen Generator geregelt.

Weiter ist aus der DE 101 01 012 A1 ein Verfahren und eine Einrichtung zum navigierten Führen von Kraftfahrzeugen bekannt, mittels dem das navigierte Führen von Kraftfahrzeugen dahingehend verbessert werden soll, dass auch Steigungen und Gefälle optimaler berücksichtigt werden. Konkret wird hierzu vorgeschlagen, dass die Ortsdaten im Fahrbetrieb zur Bestimmung eines Höhenprofils herangezogen werden und dementsprechend die momentane Motorleistung und/oder die Getriebegangstellung vorausschauend auf zu erwartende Steigung oder Gefälle hin geregelt wird.

Aus der DE 10 2008 040 284 A1 ist weiter ein Verfahren zum Erfassen von vorbestimmten Daten während des Betriebes eines Fahrzeuges bekannt, bei dem im Wesentlichen eine persönliche Fahrweise des jeweiligen Fahrers in verschiedenen Fahrsituationen ausgewertet und ermittelt wird. Dadurch soll es möglich werden, durch die Bewertung des Fahrstils des Fahrers, den Fahrer entsprechend zu schulen und auf bestimmte Fehlverhalten hinzuweisen. Beispielsweise können hier auch die auf der Fahrerkarte oder einer Chipkarte abgespeicherten Daten zum Anpassen der Fahrstrategie und der abgespeicherten Einstellungen in der Getriebesteuerung automatisch aktiviert werden, wenn der betreffende Fahrer bei dem Fahrzeug angemeldet ist.

Ein weiteres wesentliches Problem bei Kraftfahrzeugen, insbesondere bei Nutzfahrzeugen, ist der Verschleiß von Verschleißbauteilen, wie zum Beispiel den Betriebsbremsen. Je nach dem Verschleißzustand eines derartigen Verschleißbauteils muss dieses gewartet bzw. ausgetauscht werden, was zum Fahrzeugstillstand bzw. zu Reparaturkosten führt.

Die weitere DE 10 2005 035624 A1 betrifft eine Vorrichtung zur Bereitstellung von fahrstreckenabhängigen Fahranweisungen an einen Fahrer. Diese umfasst eine Auswerte- und Steuereinheit, die ein verbrauchs- und/oder verschleißoptimiertes Durchfahren der zu durchfahrenden Fahrstrecke ermöglicht, indem sie eine Sollfahrgeschwindigkeit ermittelt, eine Sensoreinheit zur Erfassung des aktuellen Fahrzustandes, eine Ortungseinheit, die den Verlauf der zu durchfahrenden Fahrstrecke und die aktuelle Fahrzeugposition ermittelt, und eine Ausgabeeinrichtung, die Fahranweisungen an den Fahrer in Abhängigkeit von einer Soligeschwindigkeit als Grenzbedingung ausgibt. Auf diese Weise wird für den Fall, dass die aktuelle Fahrgeschwindigkeit höher als die ermittelte Sollgeschwindigkeit für das verbrauchs- und/oder verschleißoptimierte Durchfahren einer Kurve ist, dem Fahrer eine Fahranweisung angezeigt.

Aus DE 10 2006 001818 A1 geht ein Verfahren zur Fahrerunterstützung hervor, bei dem Fahrbetriebskomponenten, wie beispielsweise Fahrzeuggeschwindigkeit, Beschleunigung und Bremsen, in Abhängigkeit von der jeweiligen Fahrsituation und dem Streckenverlauf eingestellt werden. Die auf dem Streckenverlauf vorliegende Topographie einer Fahrtroute wird dabei aus einem Speicher abgerufen.

WO 200510057 91 A1 offenbart ein Verfahren zur Optimierung einer Bremssequenz eines Fahrzeugs, bei dem das Fahrzeug zur Erreichung einer gewünschten Sollgeschwindigkeit unter Berücksichtigung des Abstandes zu einem vorausfahrenden Fahrzeug abgebremst oder beschleunigt wird. Hierbei wird unter anderem die Bremsfrequenz berücksichtigt und in Verbindung mit zwei unterschiedlichen Bremssystemen (Betriebsbremse, Hilfsbremse) beim Bremsen auch die, eine geringere Verschleißneigung aufweisende Hilfsbremse betätigt.

Aufgabe der vorliegenden Erfindung ist es, ein Verfahren und eine Vorrichtung zum Betrieb eines Fahrzeuges, insbesondere eines Kraft- oder Nutzfahrzeuges, zur Verfügung zu stellen, mittels dem der Verschleiß von Verschleißbauteilen reduziert werden kann.

Diese Aufgabe wird gelöst mit den Merkmalen der unabhängigen Patentansprüche. Vorteilhafte Ausgestaltungen sind Gegenstand der darauf rückbezogenen Unteransprüche.

Gemäß Anspruch 1 wird ein Verfahren zum Betrieb eines Fahrzeugs, insbesondere eines Kraft- oder Nutzfahrzeuges vorgeschlagen, das eine Erfassungseinrichtung zum Erfassen definierter Streckenabschnittsdaten eines vorausliegenden, mit einem Fahrzeug, insbesondere mit einem Nutzfahrzeug, zu durchfahrenden Streckenabschnitts erfasst. Die mittels der Erfassungseinrichtung erfassten Streckenabschnittsdaten des vorausliegenden zu durchfahrenden Streckenabschnittes werden in einer Bewertungseinrichtung im Hinblick auf das Verschleißreduzierungspotential wenigstens eines fahrzeugseitigen Verschleißbauteils für den vorausliegenden, zu durchfahrenden Streckenabschnitt dergestalt bewertet, dass zur Reduzierung und/oder Optimierung des Verschleißes des wenigstens einen Verschleißbauteils wenigstens ein Betätigungsparameter, insbesondere ein Betätigungszeitpunkt und/oder eine Betätigungszeitdauer, für das wenigstens eine Verschleißbauteil im vorausliegenden, zu durchfahrenden Streckenabschnitt vorbestimmt wird. Weiter wird wenigstens eine, das wenigstens eine Verschleißbauteil in seiner Wirkung unterstützende Hilfseinrichtung im vorausliegenden, zu durchfahrenden Streckenabschnitt entsprechend wenigstens eines vorgegebenen Hilfseinrichtungsparameters aktiviert- Erfindungsgemäß wird die wenigstens eine Hilfseinrichtung nur für den Fall aktiviert, dass bei der Bewertung eines vorausliegenden, zu durchfahrenden Streckenabschnitts ein Verschleißreduzierungspotential ermittelt wird, das einen vorgegebenen Schwellwert erreicht oder überschritten hat.

Dadurch wird sichergestellt, dass die Hilfseinrichtung nur für den Fall aktiviert wird, dass auch eine hinreichend große Verschleißreduzierung erzielt werden kann. Des Weiteren kann mittels einer derartigen Verfahrensführung das Verschleißbauteil in definierten Betriebszuständen so von der Hilfseinrichtung unterstützt werden, dass das jeweilige Verschleißbauteil entlastet wird, was vorteilhaft dazu beiträgt, die Lebensdauer des Verschleißbauteils zu erhöhen und damit dessen Verschleiß zu reduzieren. Unter einer Entlastung kann dabei sowohl die Übernahme eines Teils der vom jeweiligen Verschleißteil zu leistenden Arbeit verstanden werden, so dass das Verschleißteil nicht mehr die vollständige Arbeit leisten muss und dementsprechend im Hinblick auf die Belastung des Verschleißteils eine Entlastung stattfindet. Alternativ oder zusätzlich kann eine Entlastung aber auch dergestalt erfolgen, dass mit der Aktivierung der Hilfseinrichtung die Betätigungszeit des Verschleißbauteils reduziert werden kann, was ebenfalls erheblich zur Verlängerung der Lebensdauer des Verschleißbauteils beträgt

Durch die Bewertung des Verschleißreduzierungspotentials im Hinblick auf den vorausliegenden, zu durchfahrenden Streckenabschnitt lässt sich auf einfache Weise ein Betätigungszeitpunkt sowie eine Betätigungszeitdauer für das jeweilige Verschleißbauteil im zu durchfahrenden, vorausliegenden Streckenabschnitt ermitteln und dann dementsprechend die Aktivierung bzw. selbstverständlich auch nach erfolgter Aktivierung die Deaktivierung der Hilfseinrichtung für eine vorgegebene Zeitdauer bestimmten.

Gemäß einer besonders bevorzugten konkreten Ausgestaltung wird vorgeschlagen, dass mittels der Erfassungseinrichtung die Topographie-Daten und/oder eine aktuelle Verkehrssituation und/oder die den Verkehrsfluss beeinflussenden Regelungen und/oder Gerätschaften und/oder die Fahrbahnbeschaffenheit und/oder die Straßenverhältnisse als Streckenabschnitts-Daten des vorausliegenden, zu durchfahrenden Streckenabschnitts erfasst und der Bewertungseinrichtung zur Bewertung und/oder Optimierung des Verschleißreduzierungspotentials des wenigstens einen Verschleißbauteils zugeführt werden. Eine derartige Datenerfassung kann auf einfache Weise mittels den regelmäßig ohnehin bereits vorhandenen Einrichtungen erfolgen. Beispielsweise können mittels eines Navigationssystems die Topographiedaten des vorausliegenden, zu durchfahrenden Streckenabschnitts erfasst werden. Diese Topographie-Daten sollen dabei neben dem reinen Straßenverlauf auch die Höhenprofildaten des vorausliegenden Streckenabschnittes umfassen, also die Steigungen oder Gefälle im Bereich des vorausliegenden, zu durchfahrenden Streckenabschnitts. Die den Verkehrsfluss beeinflussenden Regelungen oder Gerätschaften, wie zum Beispiel Verkehrszeichen aller Art, insbesondere geschwindigkeitsbeschränkende Angaben, Ortstafeln, Vorfahrtszeichen, Stoppzeichen, Zebrastreifen, Ampelanlagen, etc., können zum Beispiel ebenfalls als Daten in einem Navigationssystem abgelegt sein oder aber auch Bestandteil eines separaten Systems sein, das dann die Daten in entsprechender Weise an die Erfassungseinrichtung liefert bzw. selbst Bestandteil der Erfassungseinrichtung bildet. Die Fahrbahnbeschaffenheit kann zum Beispiel in Verbindung mit den Daten herkömmlicher Brems- und Fahrwerksysteme ermittelt werden bzw. von dort abgegriffen werden. Solche Brems- und Fahrwerkssysteme können das ABS (Antiblockiersystem), das ASR (Antriebsschlupfregelung), die EBS (elektronische Bremssteuerung) und/oder eine FDR (Fahrdynamikregelung) sein. Das Gleiche gilt vom Prinzip her für die Straßenverhältnisse, wobei hier gegebenenfalls auch Daten aus einer Wetterstation oder dergleichen zur Verfügung gestellt werden können. Die aktuelle Verkehrssituation selbst kann zum Beispiel in Verbindung mit TMC-Meldungen (Traffic-Message-Channel) bestimmt werden. Je mehr Daten mittels der Erfassungseinrichtung für den zu durchfahrenden, vorausliegenden Streckenabschnitt erfasst werden, desto genauer kann das Verschleißreduzierungspotential in diesem Streckenabschnitt bestimmt und damit der Betrieb und die Betätigung sowohl des jeweiligen Verschleißbauteils als auch der der wenigstens einen Hilfseinrichtung bestimmt werden.

Gemäß einer weiteren besonders bevorzugten konkreten Ausgestaltung wird vorgeschlagen, dass der wenigstens eine Betätigungsparameter für das wenigstens eine Verschleißbauteil und/oder der wenigstens eine Hilfseinrichtungsparameter zur Verschleißreduzierung oder Verschleißoptimierung des wenigstens einen Verschleißbauteils auf der Basis einer für den vorausliegenden, zu durchfahrenden Streckenabschnitt optimalen Fahrweise ermittelt und/oder vorgegeben wird. Diese die optimale Fahrweise definierenden Fahrparameter können zum Beispiel in der Bewertungseinrichtung hinterlegt sein und dann dementsprechend von dort abgerufen werden. Alternativ können die die optimale Fahrweise definierenden Fahrparameter aber auch auf der Basis der mittels der Erfassungseinrichtung erfassten Streckenabschnittsdaten des vorausliegenden, zu durchfahrenden Streckenabschnitts stets aktuell ermittelt werden. Mit einer derartigen Verfahrensführung ist sichergestellt, dass das Verschleißreduzierungspotential optimal ausgenützt wird, weil als Bezugsgröße dann eine für den zu durchfahrenden Streckenabschnitt optimale Fahrweise herangezogen werden kann. Dieser optimalen Fahrweise können zum Beispiel Verbrauchsparameter zugrunde gelegt werden, zum Beispiel ein Energieverbrauch eines Fahrzeugs, insbesondere ein Kraftstoffverbrauch. Mit einer derartigen erfindungsgemäßen Verfahrensführung, bei der somit neben dem Verschleißreduzierungspotential auch eine optimale Fahrweise im Hinblick auf zum Beispiel ein Kraftstoffeinsparpotential zugrunde gelegt wird, lässt sich somit neben einer hinsichtlich des Verschleißes optimierten Betriebsweise auch eine hinsichtlich anderer Parameter, insbesondere Energieverbrauchsparameter, optimierte Fahrzeug-Betriebsweise erzielen. Dabei kann die optimale Fahrweise entweder dem Fahrer als optionale Wunschfahrweise vorgegeben und/oder angezeigt werden oder aber auch alternativ dem Fahrer durch einen automatischen Systemeingriff vorgegeben werden.

Gemäß einer besonders bevorzugten konkreten Ausgestaltung ist das Verschleißbauteil durch wenigstens eine fahrzeugseitige Verschleißbremse, zum Beispiel eine Betriebsbremse und/oder eine Dauerbremse gebildet, deren Verschleiß in Abhängigkeit von einer für den vorausliegenden, zu durchfahrenden Streckenabschnitt ermittelten Bremsverzögerung dadurch reduziert wird, dass im vorausliegenden, zu durchfahrenden Streckenabschnitt wenigstens ein, eine Fahrzeugverzögerung bewirkendes Nebenaggregat als Hilfseinrichtung wenigstens zeitweise aktiviert und/oder zugeschalten wird. Alternativ oder zusätzlich kann deren Verschleiß in Abhängigkeit von einer für den vorausliegenden, zu durchfahrenden Streckenabschnitt ermittelten Bremsverzögerung dadurch reduziert werden, dass wenigstens zeitweise das Schleppmoment des Fahrzeug-Antriebsmotors, zum Beispiel einer Brennkraftmaschine, erhöht wird, was zum Beispiel insbesondere durch das Einlegen einer kleineren Gangstufe erzielt wird. Mit einer derartigen Verfahrensführung braucht somit das zur jeweils gewünschten Fahrzeugverzögerung erforderliche Bremsmoment im vorausliegenden, zu durchfahrenden Streckenabschnitt nur noch zum Teil durch die wenigstens eine Verschleißbremse selbst aufgebracht werden, so dass diese dadurch geschont wird und deren Lebensdauer verlängert wird.

Konkret kann hier das wenigstens eine Nebenaggregat zum Beispiel durch einen Luftpresser oder Lüfter einer Klimaanlage und/oder einen aufladbaren Energiespeicher, wie beispielsweise eine Fahrzeugbatterie, gebildet sein, das oder die so mit dem Antriebsstrang des Fahrzeugs gekoppelt ist oder sind, dass bei deren Zuschalten ein Teil der vorhandenen Fahrzeug-Antriebsenergie zum Betätigen des jeweiligen Nebenaggregates verwendet wird und dadurch eine entsprechende Fahrzeugverzögerung erreicht wird.

Gemäß einer weiteren besonders bevorzugten Verfahrensführung kann das wenigstens eine Nebenaggregat alternativ oder zusätzlich aber auch durch eine verschleißfreie fahrzeugseitige Bremseinrichtung gebildet sein, zum Beispiel einen Retarder (Bremsmaschine), der zum Beispiel als hydrodynamischer Retarder oder als elektrodynamischer Retarder ausgeführt sein kann. Alternativ kann als verschleißfreie fahrzeugseitige Bremseinrichtung eine Motorbremseinrichtung verwendet werden, bei der die Bremswirkung zum Beispiel durch Drosselung der Abgasströmung durch eine zum Beispiel im Auspuffkrümmer angeordnete Klappe oder dergleichen erzeugt wird. Auch für diese Nebenaggregate gilt das zuvor Gesagte.

Die Bewertung des Verschleißreduzierungspotentials für einen definierten, vorausliegenden, zu durchfahrenden Streckenabschnitt kann grundsätzlich selbsttätig vom System gestartet werden, zum Beispiel in Abhängigkeit von den mittels der Erfassungseinrichtung erfassten Daten eines vorausliegenden, zu durchfahrenden Streckenabschnitts. Alternativ oder zusätzlich dazu kann die Bewertung des Verschleißreduzierungspotentials und damit gegebenenfalls die Aktivierung der wenigstens einen Hilfseinrichtung auch dann gestartet werden, wenn der Fahrer einen Verzögerungswunsch signalisiert, zum Beispiel durch Betätigen der Verschieißbremse.

Die erfindungsgemäße Vorrichtung weist die gleichen Vorteile auf, wie sie bereits zuvor in Verbindung mit der Verfahrensführung ausführlich erläutert worden sind.

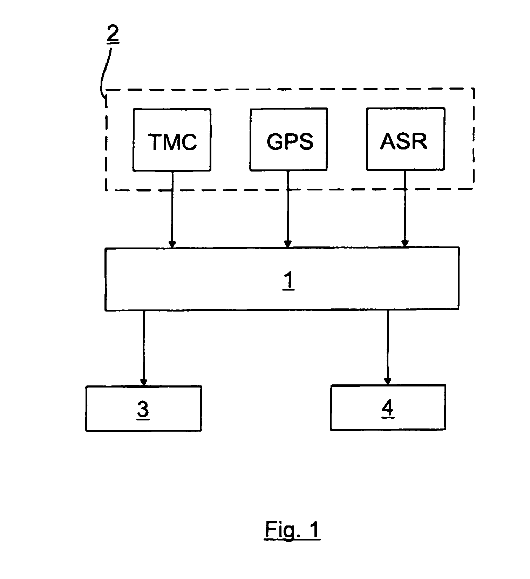

In der Fig. 1 ist lediglich äußerst schematisch und beispielhaft eine erfindungsgemäße Vorrichtung zur Durchführung des erfindungsgemäßen Verfahrens gezeigt, bei der einer Bewertungseinrichtung 1 Streckenabschnitts-Daten für einen vorausliegenden, zu durchfahrenden Streckenabschnitt mittels einer Erfassungseinrichtung 2 zugeführt werden, welche Erfassungseinrichtung 2 vorliegend Daten eines als GPS bezeichneten Navigationssystem, eines TMC (TMC = Traffic Message Channel) und einer hier als ASR bezeichneten Antriebsschlupfregelung erfasst. Auf der Basis dieser Daten wird zum Beispiel bei einer mittels der Bewertungseinrichtung 1 erfassten Betätigung einer Verschleißbremse 3 für den vorausliegenden, zu durchfahrenden Streckenabschnitt, dessen Ende zum Beispiel durch den mittels des Navigationsgerätes eingegebenen Zielpunkt oder aber auch durch jede andere vorgegebene, definierte Wegstrecke gebildet sein kann, eine benötigte Bremsverzögerung ermittelt. Diese benötigte Bremsverzögerung wird dann dergestalt bewertet bzw. gewichtet werden, dass überprüft wird, ob durch das Zuschalten eines zum Beispiel Retarders 4 als Nebenaggregat eine gewünschte Verschleißreduzierung der Verschleißbremse 3 erzielt werden kann oder nicht. Falls dies der Fall sein sollte, wird von der Bewertungseinrichtung 1 sowohl die Verschleißbremse 3 als auch der Retarder 4 angesteuert und über diese die gewünschte Fahrzeugverzögerung eingestellt. Durch das Zuschalten des Retarders 4 kann dann die Betriebsdauer bzw. die Betätigungskraft der Verschleißbremse 3 vorteilhaft reduziert werden, was sich positiv auf deren Verschleiß auswirkt.

Die vorliegende konkret beschriebene Verfahrensführung ist lediglich beispielhaft. Selbstverständlich kann anstelle eines Retarders auch eine Motorbremse aktiviert werden, und zwar gegebenenfalls anstelle des Retarders oder aber auch zusätzlich zum Retarder. Das vorbeschriebene Beispiel ist lediglich exemplarisch zu verstehen und soll keinerlei Einschränkung des Gesamtoffenbarungsgehaltes der vorliegenden Erfindungsidee bewirken.

Gemäß der vorliegenden Erfindungsidee können somit bei einem bekannten vorausliegenden Streckenabschnitt zusätzliche Verzögerungsmöglichkeiten genutzt werden. Konkret können zum Beispiel längere Gefällestrecken, die Annäherungen an eine Kreuzung, etc. über eine in den Karten des Navigationssystems abgespeicherte Topologie erkannt werden und so die zusätzlichen Verzögerungsmöglichkeiten bei Bedarf aktiviert werden, wenn der Fahrer oder aber alternativ auch ein automatisches System einen Verzögerungswunsch signalisiert.

## Patentansprüche

1. Verfahren zum Betrieb eines Fahrzeugs, insbesondere eines Kraft- oder Nutzfahrzeuges, mit einer Erfassungseinrichtung (2) zum Erfassen definierter Streckenabschnitts-Daten eines vorausliegenden, mit einem Fahrzeug, insbesondere mit einem Nutzfahrzeug, zu durchfahrenden Streckenabschnittes,
wobei die mittels der Erfassungseinrichtung erfassten Streckenabschnitts-Daten des vorausliegenden, zu durchfahrenden Streckenabschnittes in einer Bewertungseinrichtung (1)
im Hinblick auf das Verschleißreduzierungspotential wenigstens eines fahrzeugseitigen Verschleißbauteils (3) für den vorausliegenden, zu durchfahrenden Streckenabschnitt dergestalt bewertet werden, **dass** zur Reduzierung und/oder Optimierung des Verschleißes des wenigstens einen Verschleißbauteils wenigstens ein Betätigungsparameter, insbesondere ein Betätigungszeitpunkt und/oder eine Betätigungszeitdauer, für das wenigstens eine Verschleißbauteil im vorausliegenden, zu durchfahrenden Streckenabschnitt vorbestimmt wird, und
wobei wenigstens eine, das wenigstens eine Verschleißbauteil in seiner Wirkung unterstützende Hilfseinrichtung (4) im vorausliegenden, zu durchfahrenden Streckenabschnitt entsprechend wenigstens eines vorgegebenen Hilfseinrichtungsparameters aktiviert wird, **dadurch gekennzeichnet,**
**dass** die wenigstens eine Hilfseinrichtung nur für den Fall aktiviert wird, dass bei der Bewertung eines vorausliegenden, zu durchfahrenden Streckenabschnittes ein Verschleißreduzierungspotential ermittelt wird, das einen vorgegebenen Schwellwert erreicht oder überschritten hat.

2. Verfahren nach Anspruch 1, **dadurch gekennzeichnet, dass** mittels der Erfassungseinrichtung die Topographiedaten und/oder die aktuelle Verkehrssituation und/oder die den Verkehrsfluss beeinflussenden Regelungen und/oder Gerätschaften und/oder die Fahrbahnbeschaffenheit und/oder die Straßenverhältnisse als Streckenabschnitts-Daten des vorausliegenden, zu durchfahrenden Streckenabschnitts erfasst und der Bewertungseinrichtung zur Optimierung des Verschleißreduzierungspotentials des wenigstens einen Verschleißbauteils zugeführt werden.

3. Verfahren nach Anspruch 1 oder 2, **dadurch gekennzeichnet, dass** zur Verschleißreduzierung oder Verschleißoptimierung des wenigstens eines Verschleißbauteils der wenigstens eine Betätigungsparameter für das wenigstens eine Verschleißbauteil und/oder der wenigstens eine Hilfseinrichtungsparameter auf der Basis einer für den vorausliegenden, zu durchfahrenden Streckenabschnitt optimalen Fahrweise ermittelt und/oder vorgegeben wird, wobei die die optimale Fahrweise definierenden Fahrparameter in der Bewertungseinrichtung hinterlegt sind und abgerufen werden oder auf der Basis der mittels der Erfassungseinrichtung erfassten Streckenabschnitts-Daten des vorausliegenden, zu durchfahrenden Streckenabschnitts ermittelt werden.

4. Verfahren nach Anspruch 3, **dadurch gekennzeichnet, dass** die optimale Fahrweise entweder dem Fahrer als optionale Wunschfahrweise vorgegeben und/oder angezeigt wird oder dem Fahrer durch einen automatischen Systemeingriff vorgegeben wird.

5. Verfahren nach einem der vorhergehenden Ansprüche, **dadurch gekennzeichnet, dass** das Verschleißbauteil durch wenigstens eine fahrzeugseitige Verschleißbremse, insbesondere eine Betriebsbremse und/oder eine Dauerbremse gebildet ist, deren Verschleiß in Abhängigkeit von einer für den vorausliegenden, zu durchfahrenden Streckenabschnitt ermittelten Bremsverzögerung dadurch reduziert wird, dass im vorausliegenden, zu durchfahrenden Streckenabschnitt wenigstens ein, eine Fahrzeugverzögerung bewirkendes Nebenaggregat als Hilfseinrichtung wenigstens zeitweise aktiviert und/oder zugeschalten wird und/oder dadurch reduziert wird, dass das Schleppmoment des Fahrzeug-Antriebsmotors, insbesondere durch Einlegen einer kleineren Gangstufe, erhöht wird.

6. Verfahren nach Anspruch 5, **dadurch gekennzeichnet, dass** das wenigstens eine Nebenaggregat durch einen Luftpresser oder Lüfter einer Klimaanlage und/oder einen aufladbaren Energiespeicher gebildet ist, das oder die so mit dem Antriebsstrang des Fahrzeugs gekoppelt ist oder sind, dass bei deren Zuschalten ein Teil der vorhandenen Fahrzeug-Antriebsenergie zum Betätigen des jeweiligen Nebenaggregates verwendet wird und dadurch eine Fahrzeugverzögerung erreicht wird.

7. Verfahren nach einem der Ansprüche 5 oder 6, **dadurch gekennzeichnet, dass** das wenigstens eine Nebenaggregat durch eine verschleißfreie fahrzeugseitige Bremseinrichtung, insbesondere durch einen Retarder und/oder eine Motorbremseinrichtung, gebildet ist.

8. Verfahren nach einem der Ansprüche 5 bis 7, **dadurch gekennzeichnet, dass** die Bewertung des Verschleißreduzierungspotentials für einen definierten, vorausliegenden, zu durchfahrenden Streckenabschnitt selbsttätig vom System gestartet wird, insbesondere in Abhängigkeit von den mittels der Erfassungseinrichtung erfassten Daten eines vorausliegenden, zu durchfahrenden Streckenabschnitts gestartet wird, und/oder dann gestartet wird, wenn der Fahrer einen Verzögerungswunsch signalisiert.

9. Vorrichtung zum Betrieb eines Fahrzeugs, insbesondere eines Kraft- oder Nutzfahrzeuges,
mit einer Erfassungseinrichtung zum Erfassen definierter Streckenabschnitts-Daten eines vorausliegenden, mit einem Fahrzeug, insbesondere mit einem Nutzfahrzeug, zu durchfahrenden Streckenabschnittes,
wobei die mittels der Erfassungseinrichtung erfassten Streckenabschnitts-Daten des vorausliegenden, zu durchfahrenden Streckenabschnittes in einer Bewertungseinrichtung im Hinblick auf das Verschleißreduzierungspotential wenigstens eines fahrzeugseitigen Verschleißbauteils für den vorausliegenden, zu durchfahrenden Streckenabschnitt dergestalt bewertbar sind, dass zur Reduzierung und/oder Optimierung des Verschleißes des wenigstens einen Verschleißbauteils wenigstens ein Betätigungsparameter, insbesondere ein Betätigungszeitpunkt und/oder eine Betätigungszeitdauer, für das wenigstens eine Verschleißbauteil im vorausliegenden, zu durchfahrenden Streckenabschnitt vorbestimmbar ist, und
wobei wenigstens eine, das wenigstens eine Verschleißbauteil in seiner Wirkung unterstützende Hilfseinrichtung im vorausliegenden, zu durchfahrenden Streckenabschnitt entsprechend wenigstens eines vorgegebenen Hilfseinrichtungsparameters aktivierbar ist, **dadurch gekennzeichnet,**
**dass** die wenigstens eine Hilfseinrichtung nur für den Fall aktivierbar ist, dass bei der Bewertung eines vorausliegenden, zu durchfahrenden Streckenabschnittes ein Verschleißreduzierungspotential ermittelt wird, das einen vorgegebenen Schwellwert erreicht oder überschritten hat.

## Claims

1. Method for operating a vehicle, in particular a motor vehicle or utility vehicle, having an acquisition device (2) for acquiring defined route section data of an upcoming route section to be passed through using a vehicle, in particular using a utility vehicle, the route section data, which is acquired by means of the acquisition device, of the upcoming route section to be passed through being evaluated in an evaluation device (1) with respect to the wear reduction potential of at least one vehicle-side wearing part (3) for the upcoming route section to be passed through such that at least one actuating parameter, in particular an actuating time and/or an actuating duration, for the at least one wearing part in the upcoming route section to be passed through is predetermined to reduce and/or optimize the wear of the at least one wearing part, and at least one auxiliary device (4), which supports the at least one wearing part in its action, being activated in the upcoming route section to be passed through in accordance with at least one predefined auxiliary device parameter, **characterized in that** the at least one auxiliary device is only activated for the case in which a wear reduction potential, which has reached or exceeded a predefined threshold value, is ascertained during the evaluation of an upcoming route section to be passed through.

2. Method according to Claim 1, **characterized in that** the topography data and/or the current traffic situation and/or regulations and/or equipment which influence the traffic flow and/or the roadway composition and/or the road conditions are acquired by means of the acquisition device as route section data of the upcoming route section to be passed through and supplied to the evaluation device to optimize the wear reduction potential of the at least one wearing part.

3. Method according to Claim 1 or 2, **characterized in that**, for the wear reduction or wear optimization of the at least one wearing part, the at least one actuating parameter for the at least one wearing part and/or the at least one auxiliary device parameter is ascertained and/or predefined on the basis of an optimum mode of driving for the upcoming route section to be passed through, the driving parameters which define the optimum mode of driving being stored in the evaluation device and retrieved or being ascertained on the basis of the route section data, which are acquired by means of the acquisition device, of the upcoming route section to be passed through.

4. Method according to Claim 3, **characterized in that** the optimum mode of driving is either predefined and/or displayed to the driver as an optional desired mode of driving or is predefined for the driver by an automatic system intervention.

5. Method according to one of the preceding claims, **characterized in that** the wearing part is formed by at least one vehicle-side wearing brake, in particular a service brake and/or a permanent brake, the wear of which is reduced as a function of a brake deceleration ascertained for the upcoming route section to be passed through **in that**, in the upcoming route section to be passed through, at least one secondary assembly which causes vehicle deceleration is at least temporarily activated and/or turned on as an auxiliary device and/or is reduced **in that** the drag torque of the vehicle drive engine is increased, in particular by engaging a lower gear step.

6. Method according to Claim 5, **characterized, in that** the at least one secondary assembly is formed by an air compressor or fan of an air conditioner and/or a chargeable energy store, which is/are coupled to the drivetrain of the vehicle such that, when it/they is/are switched in, a part of the existing vehicle drive energy is used to actuate the respective secondary assembly and a vehicle deceleration is thus achieved.

7. Method according one of Claims 5 or 6, **characterized in that** the at least one secondary assembly is formed by a wear-free vehicle-side brake device, in particular by a retarder and/or an engine brake device.

8. Method according to one of Claims 5 to 7, **characterized in that** the evaluation of the wear reduction potential for a defined upcoming route section to be passed through is started automatically by the system, in particular as a function of the data, which is acquired by means of the acquisition device, of an upcoming route section to be passed through, and/or is started when the driver signals a deceleration intent.

9. Device for operating a vehicle, in particular a motor vehicle or utility vehicle, having an acquisition device for acquiring defined route section data of an upcoming route section to be passed through using a vehicle, in particular using a utility vehicle, it being possible for the route section data, which is acquired by means of the acquisition device, of the upcoming route section to be passed through to be evaluated in an evaluation device with respect to the wear reduction potential of at least one vehicle-side wearing part for the upcoming route section to be passed through such that at least one actuating parameter, in particular an actuating time and/or an actuating duration, for the at least one wearing part in the upcoming route section to be passed through can be predetermined to reduce and/or optimize the wear of the at least one wearing part, and it being possible for at least one auxiliary device, which supports the at least one wearing part in its action, to be activated in the upcoming route section to be passed through in accordance with at least one predefined auxiliary device parameter, **characterized in that** the at least one auxiliary device can only be activated for the case in which a wear reduction potential, which has reached or exceeded a predefined threshold value, is ascertained during the evaluation of an upcoming route section to be passed through.

## Revendications

1. Procédé destiné à l'entraînement d'un véhicule, notamment d'un véhicule automobile ou utilitaire, avec un dispositif de détection (2) servant à la détection de données de segment de tronçon définies d'un segment de tronçon prévu à parcourir avec un véhicule, notamment avec un véhicule utilitaire ;
les données de segment de tronçon détectées à l'aide du dispositif de détection du segment de tronçon prévu à parcourir étant analysées de telle sorte dans un dispositif d'analyse (1), en ce qui concerne le potentiel de réduction d'usure d'au moins un composant d'usure (3) situé du côté du véhicule pour le segment de tronçon prévu à parcourir, que pour réduire et/ou optimiser l'usure de l'au moins un composant d'usure, au moins un paramètre d'actionnement, notamment un moment d'actionnement et/ou une durée d'actionnement, est prédéfini pour l'au moins un composant d'usure dans le segment de tronçon prévu à parcourir ; et
au moins un dispositif auxiliaire (4) soutenant par son action l'au moins un composant d'usure étant activé dans le segment de tronçon prévu à parcourir en fonction d'au moins un paramètre de dispositif auxiliaire prédéfini ;
**caractérisé en ce que** :
l'au moins un dispositif auxiliaire n'est activé que dans le cas dans lequel un potentiel de réduction d'usure ayant atteint ou dépassé une valeur seuil prédéfinie est calculé lors de l'analyse d'un segment de tronçon prévu à parcourir.

2. Procédé selon la revendication 1, **caractérisé en ce que** les données topographiques et/ou la situation actuelle de trafic et/ou les réglementations influençant le trafic et/ou les zones de travaux et/ou la structure des voies de circulation et/ou les proportions des rues sont détectées comme des données de segment de tronçon du segment de tronçon prévu à parcourir à l'aide du dispositif de détection et sont fournies au dispositif d'analyse pour l'optimisation du potentiel de réduction d'usure de l'au moins un composant d'usure.

3. Procédé selon la revendication 1 ou 2, **caractérisé en ce que** la réduction d'usure ou l'optimisation d'usure de l'au moins un composant d'usure utilise l'au moins un paramètre d'actionnement de l'au moins un composant d'usure et/ou l'au moins un paramètre de dispositif auxiliaire calculé et/ou prédéfini sur la base d'un mode de conduite optimal pour le segment de tronçon prévu à parcourir, les paramètres de conduite définissant le mode de conduite optimal étant mémorisés dans le dispositif d'analyse et appelés ou étant calculés sur la base des données de segment de tronçon, détectées à l'aide du dispositif de détection, du segment de tronçon prévu à parcourir.

4. Procédé selon la revendication 3, **caractérisé en ce que** le mode de conduite optimal est soit fourni au préalable et/ou affiché au conducteur comme mode de conduite souhaité soit fourni au préalable au conducteur par une intervention automatique du système.

5. Procédé selon l'une quelconque des revendications précédentes, **caractérisé en ce que** le composant d'usure est formé par au moins un frein d'usure situé du côté du véhicule, notamment un frein de service et/ou un frein de stationnement dont l'usure est réduite en fonction d'un ralentissement de freinage déterminé pour le segment de tronçon prévu à parcourir en activant et/ou connectant au moins temporairement dans le segment de tronçon prévu à parcourir au moins un groupe secondaire sous forme de dispositif auxiliaire permettant de ralentir le véhicule et/ou dont l'usure est réduite en augmentant le couple d'inertie du moteur d'entraînement du véhicule, notamment en passant à un étage de rapport plus petit.

6. Procédé selon la revendication 5, **caractérisé en ce que** l'au moins un groupe secondaire est formé par un compresseur d'air ou un ventilateur d'une installation de climatisation et/ou un accumulateur d'énergie chargeable couplés de telle sorte à la chaîne cinématique du véhicule que lorsqu'ils sont connectés, une partie de l'énergie d'entraînement présente du véhicule est utilisée pour l'actionnement du groupe secondaire respectif, permettant ainsi d'atteindre un ralentissement du véhicule.

7. Procédé selon l'une quelconque des revendications 5 ou 6, **caractérisé en ce que** l'au moins un groupe secondaire est formé par un dispositif de frein sans usure situé du côté du véhicule, notamment par un retardateur et/ou un dispositif de frein moteur.

8. Procédé selon l'une quelconque des revendications 5 à 7, **caractérisé en ce que** l'analyste du potentiel de réduction d'usure est démarrée automatiquement par le système pour un segment de tronçon prévu à parcourir défini, notamment démarrée en fonction des données détectées à l'aide du dispositif de détection d' un segment de tronçon prévu à parcourir et/ou démarrée lorsque le conducteur signale un souhait de ralentissement.

9. Dispositif destiné à l'entraînement d'un véhicule, notamment d'un véhicule automobile ou utilitaire ;
avec un dispositif de détection (2) servant à la détection de données de segment de tronçon définies d'un segment de tronçon prévu à parcourir avec un véhicule, notamment avec un véhicule utilitaire ;
les données de segment de tronçon détectées à l'aide du dispositif de détection du segment de tronçon prévu à parcourir étant analysées de telle sorte dans un dispositif d'analyse, en ce qui concerne le potentiel de réduction d'usure d'au moins un composant d'usure situé du côté du véhicule pour le segment de tronçon prévu à parcourir, que pour réduire et/ou optimiser l'usure de l'au moins un composant d'usure, au moins un paramètre d'actionnement, notamment un moment d'actionnement et/ou une durée d'actionnement, est prédéfini pour l'au moins un composant d'usure dans le segment de tronçon prévu à parcourir ; et
au moins un dispositif auxiliaire soutenant par son action l'au moins un composant d'usure étant activé dans le segment de tronçon prévu à parcourir en fonction d'au moins un paramètre de dispositif auxiliaire prédéfini ;
**caractérisé en ce que** :
l'au moins un dispositif auxiliaire ne peut être activé que dans le cas dans lequel un potentiel de réduction d'usure ayant atteint ou dépassé une valeur seuil prédéfinie est calculé lors de l'analyse d'un segment de tronçon prévu à parcourir.
